# EUROPEAN PATENT SPECIFICATION

(11) **EP 2 731 252 B1**
(45) Date of publication and mention of the grant of the patent: **18.04.2018**
(21) Application number: 12840852.3
(22) Date of filing: 01.11.2012
(51) Int. Cl.: H02M 7/48, H02M 7/5387, H02M 1/00

(54) **INVERTER CIRCUIT AND CONTROL METHOD THEREFOR**
WECHSELRICHTERKREIS UND STEUERVERFAHREN DAFÜR
CIRCUIT INVERSEUR ET SON PROCÉDÉ DE COMMANDE

(30) Priority: 15.02.2012 CN 201210033880
(43) Date of publication of application: 14.05.2014
(73) Proprietor: Huawei Technologies Co., Ltd., Longgang District Shenzhen, Guangdong 518129 (CN)
(72) Inventor: ZHANG, Yanzhong, Shenzhen Guangdong 518129 (CN)
(74) Representative: Gill Jennings & Every LLP
(86) International application number: PCT/CN2012/083905
(87) International publication number: WO 2013/120363

(56) References cited:
- EP-A1- 2 568 592
- EP-A1- 2 731 251
- CN-A- 101 917 134
- CN-A- 102 437 765
- CN-A- 102 684 525
- US-A- 4 769 754
- US-A1- 2006 221 648
- US-A1- 2006 221 648
- US-A1- 2011 222 326
- ASIMINOAEI L ET AL: "Shunt Active-Power-Filter Topology Based on Parallel Interleaved Inverters", IEEE TRANSACTIONS ON INDUSTRIAL ELECTRONICS, IEEE SERVICE CENTER, PISCATAWAY, NJ, USA, vol. 55, no. 3, 1 March 2008 (2008-03-01), pages 1175-1189, XP011202514, ISSN: 0278-0046

## Description

### FIELD OF THE INVENTION

The present invention relates to the field of electrical and electronic technologies, and in particular, to an inverter circuit and a control method for the inverter circuit.

### BACKGROUND OF THE INVENTION

An inverter circuit is a circuit for converting a direct current into an alternating current and also is a circuit for converting direct current energy into alternating current energy, and includes a form of outputting an alternating current voltage, such as an uninterruptible power supply, and a form of outputting an alternating current by following an external alternating current voltage, such as a solar grid-connected inverter and a wind-driven grid-connected generator.

In an existing inverter circuit, to convert the direct current energy into the alternating current energy during a usage process, high-frequency switching needs to be performed on a switch component in the inverter circuit. According to a switching loss difference of the switch component in switching processes of turn-on and turn-off, the switch component may be classified into a soft switch and a hard switch. Specifically, in a turn-on process of a switch, power consumption generated due to a time overlap between a decreasing voltage over two ends of the switch and an increasing current flowing through the switch is switching turn-on loss; or in a turn-off process of the switch, power consumption generated due to a time overlap between a decreasing current flowing through the switch and an increasing voltage over the two ends of the switch is switching turn-off loss. A switch where a switching loss cannot be avoided is referred to as a hard switch, while a switch where a switching loss can be avoided is referred to as a soft switch.

In the prior art, a switch component used in an inverter circuit is a hard switch, resulting in large power consumption in a process of converting a direct current into an alternating current, and having a low energy conversion efficiency. In US2006/0221648A1, it is suggested that a high-efficiency phase shift modulation method that is suitable for use in a traditional DC/AC single-phase full-bridge inverter. EP2731251A1 and EP2568592A1 each disclose an inverter circuit and an inversion method with improved efficiency of the inverter circuit over previous circuits.

### SUMMARY OF THE INVENTION

Embodiments of the present invention provide an inverter circuit and a control method for the inverter circuit, to implement a soft switch in an inverter circuit.

An embodiment of the present invention provides an inverter circuit, including a direct current source, an alternating current circuit and more than one inverter bridge, where the inverter bridges includes a first bridge and a second bridge, where the first bridge is connected to the positive pole and the negative pole of the direct current source, the second bridge is connected to the positive pole and the negative pole of the direct current source, and the first bridge and the second bridge are arranged in parallel;
the first bridge includes a first switch component set and a second switch component set that are in series, where the first switch component set includes a first switch tube and a first diode unit that are in parallel, where the negative pole of the first diode unit is connected to the positive pole of the direct current source, and the second switch component set includes a second switch tube and a second diode unit that are in parallel, where the negative pole of the second diode unit is connected to the positive pole of the direct current source, and wherein the first bridge comprises a first inductor;
the second bridge includes a third switch component set and a fourth switch component set that are in series, where the third switch component set includes a third switch tube and a third diode unit that are in parallel, where the negative pole of the third diode unit is connected to the positive pole of the direct current source, and the fourth switch component set includes a fourth switch tube and a fourth diode unit that are in parallel, where the negative pole of the fourth diode unit is connected to the positive pole of the direct current source, and wherein the second bridge comprises a second inductor;
the alternating current circuit includes a first alternating current source and a first capacitor that are in parallel, or includes a first alternating current load and a first capacitor that are in parallel, where one end of the alternating current circuit is connected between the first switch component set and the second switch component set of the first bridge through the first inductor, and the other end of the alternating current circuit is connected between the third switch component set and the fourth switch component set of the second bridge through the second inductor; wherein the inverter circuit is arranged such that low-current turn-off of the second switch tube is implemented by, in a process that the inductive current flowing through the first inductor and the second inductor gradually decreases to zero, and the charged first capacitor discharges to generate and gradually increase a reverse inductive current flowing through the first inductor and the second inductor, if it is detected that the inductive current or the reverse inductive current flowing through the first inductor and the second inductor has an absolute value smaller than a first threshold, then the second switch tube is turned off, and, charaterised in that when the inverter circuit has more than two inverter bridges, and the first inductor and the second inductor are part of different inverter bridges, a time when an inductive current flowing through the first inductor reaches a peak and another time when an inductive current flowing through the second inductor reaches a peak are controlled to be staggered, and the circuit further comprises a third inductor (L3) and a fourth inductor (L4), wherein when the alternating current circuit comprises the first alternating current source, the first capacitor is in parallel with a circuit which is formed by the third inductor, the first alternating current source and the fourth inductor; and when the alternating current circuit comprises the first alternating current load, the first capacitor is in parallel with a circuit which is formed by the third inductor, the first alternating current load and the fourth inductor.

An embodiment of the present invention provides a control method for the inverter circuit, where any inverter bridge in the inverter circuit is controlled according to the following method:
turning on a first switch tube and a fourth switch tube, and turning off a second switch tube and a third switch tube, so that an inductive current flowing through the first inductor and the second inductor gradually increases, where the inductive current is divided into a current flowing through a first alternating current source or a first alternating current load, and a current for charging a first capacitor;
turning off the first switch tube after the inductive current flowing through the first inductor and the second inductor reaches a peak in a continuous set first time period;
enabling a second diode unit to be in on-state, and turning on a second switch tube, to implement low-voltage turn-on of the second switch tube; and
in a process that the inductive current flowing through the first inductor and the second inductor gradually decreases to zero, and the charged first capacitor discharges to generate and gradually increase a reverse inductive current flowing through the first inductor and the second inductor, if it is detected that the inductive current or the reverse inductive current flowing through the first inductor and the second inductor has an absolute value smaller than a first threshold, turning off the second switch tube, to implement low-current turn-off of the second switch tube, and characterised in that when the inverter circuit has more than two inverter bridges, and the first inductor and the second inductor are part of different inverter bridges, a time when an inductive current flowing through the first inductor reaches a peak and another time when an inductive current flowing through the second inductor reaches a peak are controlled to be staggered, and the circuit further comprises a third inductor (L3) and a fourth inductor (L4), wherein when the alternating current circuit comprises the first alternating current source, the first capacitor is in parallel with a circuit which is formed by the third inductor, the first alternating current source and the fourth inductor; and when the alternating current circuit comprises the first alternating current load, the first capacitor is in parallel with a circuit which is formed by the third inductor, the first alternating current load and the fourth inductor.

### BRIEF DESCRIPTION OF THE DRAWINGS

To describe the technical solutions in the embodiment of the present invention or in the prior art more clearly, the following briefly introduces accompanying drawings required for describing the embodiment or the prior art. Apparently, the accompanying drawings in the following description show some embodiment of the present invention, and persons of ordinary skill in the art may still derive other drawings from these accompanying drawings without creative efforts.
FIG. 1 is a first schematic structural diagram of an inverter circuit according to a comparative example to the present invention;
FIG. 2 is a second schematic structural diagram of an inverter circuit according to a comparative example to the present invention;
FIG. 3 is a first schematic diagram of a working principle of an inverter circuit according to a comparative example to the present invention;
FIG. 4 is a second schematic diagram of a working principle of an inverter circuit according to a comparative example to the present invention;
FIG. 5 is a schematic flow chart of a control method for unipolar output of an inverter circuit according to a comparative example to the present invention;
FIG. 6A and FIG. 6B are schematic diagrams of unipolar modulation output of an inverter circuit according to a comparative example to the present invention;
FIG. 7 is a third schematic diagram of a working principle of an inverter circuit according to a comparative example to the present invention;
FIG. 8 is a fourth schematic diagram of a working principle of an inverter circuit according to a comparative example to the present invention;
FIG. 9 is a schematic flow chart of a control method for bipolar output of an inverter circuit according to a comparative example to the present invention;
FIG. 10 is a schematic structural diagram of an inverter circuit according to a comparative example to the present invention;
FIG. 11 is a schematic diagram of output of the inverter circuit described in FIG. 10;
FIG. 12 is a diagram of comparison between a voltage and a current of reactive power compensation according to an embodiment of the present invention;
FIG. 13 is a first schematic diagram of a working principle of reactive power compensation according to a comparative example to the present invention;
FIG. 14 is a second schematic diagram of a working principle of reactive power compensation according to a comparative example to the present invention;
FIG. 15 is a third schematic diagram of a working principle of reactive power compensation according to a comparative example to the present invention;
FIG. 16 is a fourth schematic diagram of a working principle of reactive power compensation according to a comparative example to the present invention;
FIG. 17 is a fifth schematic diagram of a working principle of reactive power compensation according to a comparative example to the present invention;
FIG. 18 is a sixth schematic diagram of a working principle of reactive power compensation according to a comparative example to the present invention;
FIG. 19 is a seventh schematic diagram of a working principle of reactive power compensation according to a comparative example to the present invention; and
FIG. 20 is an eighth schematic diagram of a working principle of reactive power compensation according to a comparative example to the present invention.

### DETAILED DESCRIPTION OF THE EMBODIMENT

To make the objectives, technical solutions, and advantages of the embodiment of the present invention more comprehensible, the following clearly and completely describes the technical solutions in the embodiment of the present invention with reference to the accompanying drawings in the embodiment of the present invention. Apparently, the described embodiment is merely part rather than all of the embodiments of the present invention. All other embodiments obtained by persons of ordinary skill in the art based on the embodiment of the present invention without creative efforts shall fall within the protection scope of the present invention.

For the problem in the prior art that a switch component in an inverter circuit is a hard switch, and a problem that a large loss in a process of converting a direct current into an alternating current is easily caused, the embodiments of the present invention provide an inverter circuit and a control method for the inverter circuit, which can implement a soft switch by controlling the inverter circuit, thereby reducing the energy loss in the inversion process, and improving energy conversion efficiency.

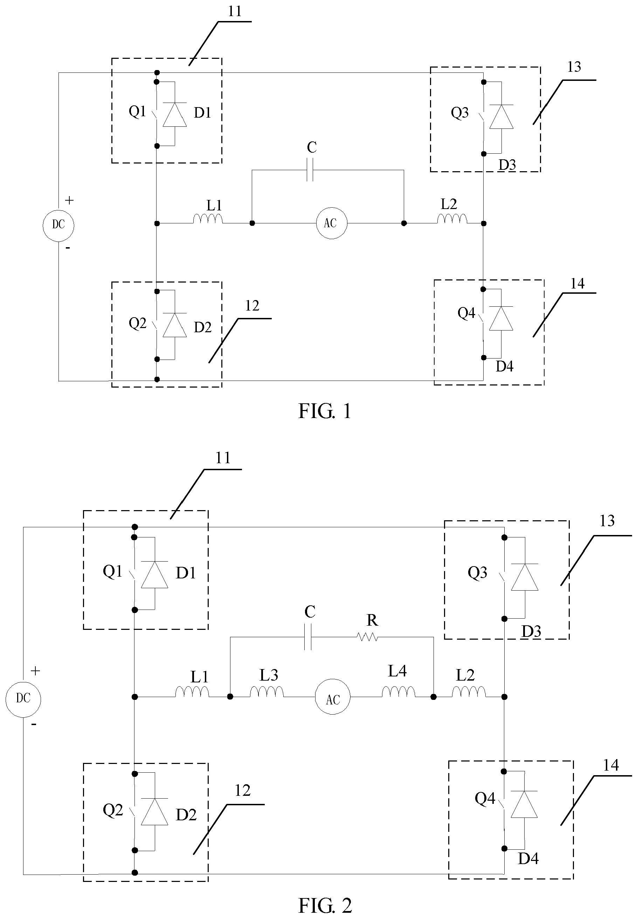

FIG. 1 is a first schematic structural diagram of an inverter circuit according to a comparative example to the present invention. As shown in FIG. 1, the inverter circuit includes a direct current source DC, an alternating current circuit and more than one inverter bridge. The inverter bridge includes a first bridge and a second bridge. An output voltage of the direct current source DC is U_{dc}. The first bridge and the second bridge are arranged in parallel, and are connected between the positive pole and the negative pole of the direct current source respectively. Specifically, the first bridge includes a first switch component set 11 and a second switch component set 12 that are in series, where the first switch component set 11 includes a first switch tube Q1 and a first diode unit D1, where the negative pole of the first diode unit D1 is connected to the positive pole of the direct current source DC, and the second switch component set 12 includes a second switch tube Q2 and a second diode unit D2, where the negative pole of the second diode unit D2 is connected to the positive pole of the direct current source DC. The second bridge also includes a third switch component set 13 and a fourth switch component set 14 that are in series, where the third switch component set 13 includes a third switch tube Q3 and a third diode unit D3, where the negative pole of the third diode unit D3 is connected to the positive pole of the direct current source DC, and the fourth switch component set 14 includes a fourth switch tube Q4 and a fourth diode unit D4, where the negative pole of the fourth diode unit D4 is connected to the positive pole of the direct current source DC. The alternating current circuit includes a first alternating current source AC and a first capacitor C that are in parallel, or includes a first alternating current load AC and a first capacitor C that are in parallel, where one end of the alternating current circuit is connected between the first switch component set 11 and the second switch component set 12 of the first bridge through a first inductor, and the other end of the alternating current circuit is connected between the third switch component set 13 and the fourth switch component set 14 of the second bridge through a second inductor.

In this comparative example, one or more inverter bridges are included, where each inverter bridge includes a first bridge and a second bridge that are arranged in parallel. In addition, an alternating current circuit is included, where one end of the alternating current circuit is connected between a first switch component set and a second switch component set of the first bridge, and the other end of the alternating current circuit is connected between a third switch component set and a fourth switch component set of the second bridge, and the alternating current circuit includes a first capacitor and a first alternating current source that are in parallel, or includes a first alternating current load and a first capacitor that are in parallel. In the inverter circuit, a function of a soft switch can be implemented by properly controlling each inverter bridge.

For example, in the process of controlling any inverter bridge in the inverter circuit, the first switch tube and the fourth switch tube may be turned on first, and the second switch tube and the third switch tube are turned off, so that an inductive current flowing through the first inductor and the second inductor gradually increases, where the inductive current is divided into a current flowing through the first alternating current source or the first alternating current load, and a current for charging the first capacitor; the first switch tube is turned off after the inductive current flowing through the first inductor and the second inductor reaches a peak after a continuous set first time period; as described above, after the first switch tube is turned off, the second diode unit is turned to be in on-state firstly and is in on-state, and the second switch tube and the second diode unit are in parallel, a voltage over two ends of the second diode unit is equal to a forwarding conducting voltage drop of a diode at this time, and for a silicon diode, the value of the voltage is only in the range of 0.3 V to 0.7 V, so the voltage over the two ends of the second switch tube may be reduced to a very low value, and the second switch tube is turned off to implement low-voltage turn-on of the second switch tube.

Further, after the second switch tube is turned on, the inductive current flowing through the first inductor and the second inductor gradually decreases to zero, the charged first capacitor discharges to generate and gradually increase a reverse inductive current flowing through the first inductor and the second inductor. In this process, if it is detected that the inductive current or the reverse inductive current flowing through the first inductor and the second inductor has an absolute value smaller than a first threshold, the second switch tube is turned off, so that low-current turn-off of the second switch tube can be implemented, where the first threshold may be set according to an actual requirement, for example, the first threshold may be set to 1 A.

In addition, after the second switch tube is turned off, the first diode unit is turned on first, so that a voltage over two ends of the first diode unit is close to zero. At this time, low-voltage turn-on of the first switch tube can be implemented by turning on the first switch tube.

In this comparative example, the low-voltage turn-on and the low-current turn-off of the switch tubes can be implemented by properly controlling the inverter circuit, so as to achieve an effect of the soft switch. In a case that the inverter circuit has more than two inverter bridges, and the first inductor and the second inductor are on different inverter bridges, a time when an inductive current flowing through the first inductor reaches a peak and another time when an inductive current flowing through the second inductor reaches a peak are controlled to be staggered.

Different from the foregoing technical solution where the fourth switch tube is maintained in a off state, and states of the first switch tube and the second switch tube are converted at a high frequency to implement the soft switch, another technical solution may be that the second switch tube is maintained in the off state, and states of the third switch tube and the fourth switch tube are converted at a high frequency to implement the soft switch. Specifically, the second switch tube and the third switch tube are turned on, and the first switch tube and the fourth switch tube are turned off, so that an inductive current flowing through the first inductor and the second inductor gradually increases, where the inductive current is divided into a current flowing through the first alternating current source or the first alternating current load, and a current for charging the first capacitor; the third switch tube is turned off after the inductive current flowing through the first inductor and the second inductor reaches a peak in the continuous set time period; and after the third switch tube is turned off, the fourth diode unit is turned to be in on-state firstly and is in on-state, and at this time, low-voltage turn-on of the fourth switch tube can be implemented by turning on the fourth switch tube.

Further, after the fourth switch tube is turned on, the inductive current flowing through the first inductor and the second inductor gradually decreases to zero, the charged first capacitor discharges to generate and gradually increase a reverse inductive current flowing through the first inductor and the second inductor. In this process, detection is performed on the inductive current and the reverse inductive current flowing through the first inductor and the second inductor, and when it is detected that the inductive current or the reverse inductive current flowing through the first inductor and the second inductor has an absolute value smaller than a first threshold, low-current turn-off of the fourth switch tube can be implemented by turning off the fourth switch tube.

In addition, after the fourth switch tube is turned off, the third diode unit is in on-state, and a voltage over two ends of the third diode unit is low. At this time, low-voltage turn-on of the third switch tube can be implemented by turning on the third switch tube.

In addition, in the foregoing comparative example, In the case that the inverter circuit has more than two inverter bridges, and the first inductor and the second inductor are on different inverter bridges, a time when an inductive current flowing through the first inductor reaches a peak and another time when an inductive current flowing through the second inductor reaches a peak are controlled to be staggered.

In addition, as shown in FIG. 2, a resistor R is further arranged in series with the first capacitor C, where the resistor R can serve a function of suppressing resonance, and a third inductor L3 and a fourth inductor L4 may be further arranged. When the alternating current circuit includes a first alternating current source, the first capacitor C is in parallel with a circuit, which is formed by the third inductor L3, the first alternating current source, and the fourth inductor L4. When the alternating current circuit includes a first alternating current load, the first capacitor C is in series with a circuit, which is formed by the third inductor L3, the first alternating current load, and the fourth inductor L4.

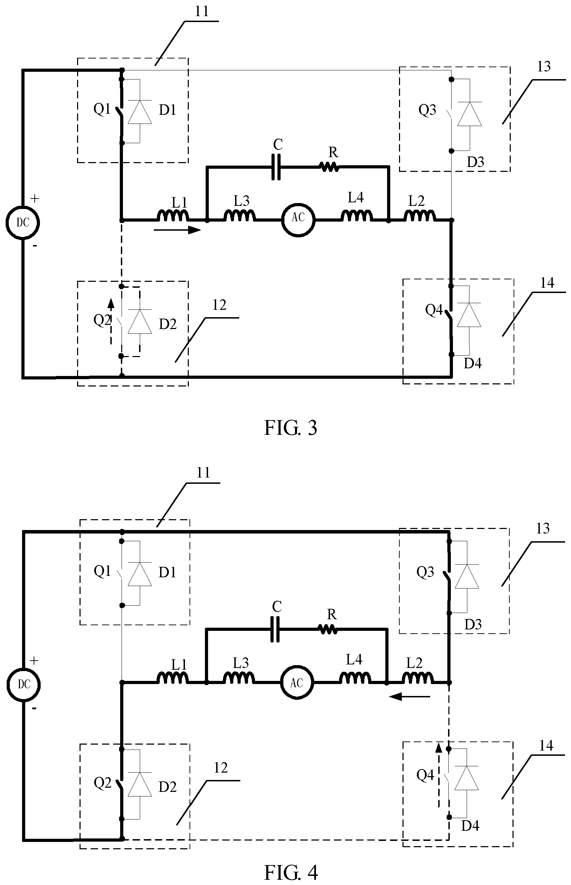

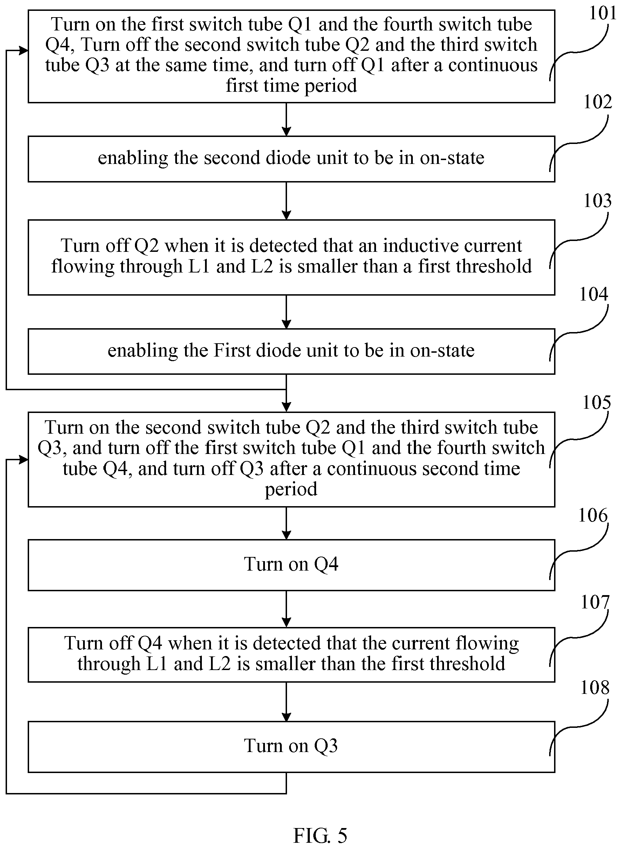

Specifically, unipolar modulation output of the inverter circuit can be implemented through controlling states of switch tubes in the inverter bridge of the inverter circuit. The working principle of the unipolar modulation output is shown in FIG. 3 and FIG. 4, and a step procedure in one output cycle of the unipolar modulation output is shown in FIG. 5, and includes the following steps.

Step 101: Turn on the first switch tube Q1 and the fourth switch tube Q4, to make Q1 and Q4 be in on-state, and turn off the second switch tube Q2 and the third switch tube Q3 at the same time. At this time, in one loop, a current is output from the positive pole of the direct current source, and flows through Q1, L1, C, L2, and Q4, and back to the negative pole of the direct current source. The resistor R may be further arranged in series with the first capacitor C, the current of the loop charges the first capacitor C, and the arranged resistor R can serve the function of suppressing resonance. In addition, another loop is further included, that is, a current is output from the positive pole of the direct current source, and flows through Q1, L1, AC, L2, and Q4, and back to the negative pole of the direct current source. The third inductor L3 and the fourth inductor L4 may further be connected in series and at two ends of AC, and can also serve the function of suppressing resonance. In this step, in an early stage when Q1 and Q4 are turned on, an inductive current flowing through L1 and L2 gradually increases, and Q1 is turned off after the current flowing through L1 and L2 reaches a peak in a continuous first time period, where the first time period may be preset according to an output requirement, and the peak of the inductive current is related to the length of the first time period.

Step 102: Turn on Q2. At this time, the inductors L1 and L2 serve a function of freewheeling. After Q1 is turned off, the D2 is turned to be on-state and is in on-state. After turn-on, a voltage over two ends of D2 and Q2 is very low and close to zero. At this time, low-voltage turn-on of Q2 can be implemented by turning on Q2. In this process, the inductors freewheel, and the inductive current flowing through L1 and L2 gradually decreases to zero.

Step 103: C is charged in both step 101 and step 102, and after the inductive current flowing through L1 and L2 gradually decreases to zero, the capacitor also discharges to generate a reverse inductive current flowing through L1 and L2. In this process, detection may be performed on the inductive current and the reverse inductive current flowing through L1 and L2, and when it is detected that the inductive current flowing through L1 and L2 is smaller than a first threshold, Q2 is turned off, to implement zero-current turn-off of Q2, where the first threshold may be set to 1 A.

Step 104: Turn on Q1. As after Q2 is turned off, a discharge current of the first capacitor C flows through D1. At this time, D1 is in on-state, and at the two ends of D1 and Q1 is close to zero. At this time, zero-voltage turn-on of 1 can be implemented by turning on Q1. The procedure is returned to the stage when Q1 and Q4 are turned on at the same time in step 101.

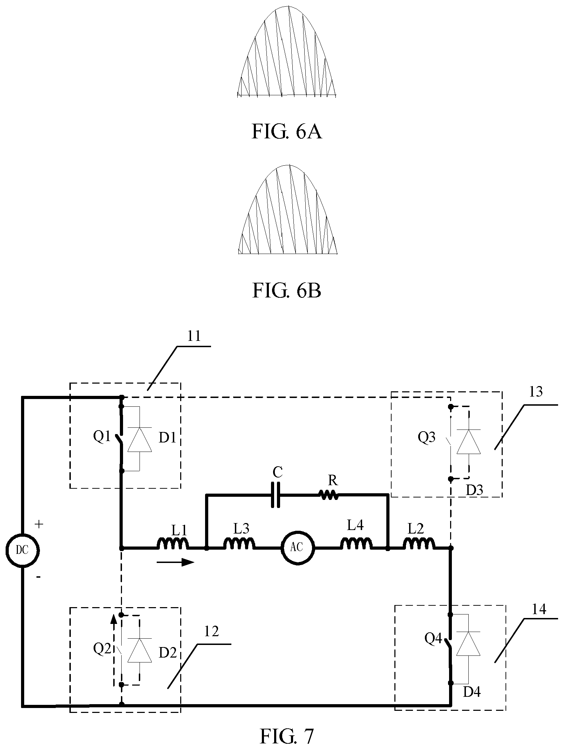

In the first half output cycle of the inverter circuit, steps 101 to 104 are executed repeatedly. The peak of the inductive current flowing through L1 and L2 may be controlled by controlling time from turning on to turn-off of Q1, that is, the first time period. In the first 1/4 cycle, the first time period may be gradually increased, and in the second 1/4 cycle, the first time period may be gradually reduced. Specifically, the inductive current flowing through L1 and L2 is shown in FIG. 6A, and a sawtooth wave in FIG. 6A indicates a change of an actual inductive current flowing through L1 and L2. However, the first capacitor C is used in the foregoing comparative example, where the first capacitor C can serve a function of smoothing the inductive current.

In the foregoing process, a voltage U_{ab} between two points A and B is converted at a high frequency between U_{dc} and 0, the time from turning on to turn-off of Q1 is controlled, so that the voltage U_{ab} is equivalent to a sine positive half wave in area in the half cycle when Q4 is turned on, and a high-frequency voltage pulse of U_{ab} is filtered by L1 and L2, and is in the same phase with a sine positive half wave of the alternating current source, to implement voltage following.

In the first half cycle, it can be implemented by controlling Q1, Q2, and Q4. In the second half cycle, as shown in FIG. 4, it can be implemented through controlling Q2, Q3, and Q4. In this process, Q2 is maintained in a turned on state. The following steps are specifically included.

Step 105: Turn on the second switch tube Q2 and the third switch tube Q3, to make the second switch tube Q2 and the third switch tube Q3 be in on-state, and turn off the first switch tube Q1 and the fourth switch tube Q4. At this time, in one loop, a current is output from the positive pole of the direct current source, and flows through Q3, L2, C, L1, and Q2, and back to the negative pole of the direct current source. The resistor R may be further arranged in series with the first capacitor C, the current of the loop charges the first capacitor C, and the arranged resistor R can serve the function of suppressing resonance. In addition, another loop is further included, that is, a current is output from the positive pole of the direct current source, and flows through Q3, L2, AC, L1, and Q2, and back to the negative pole of the direct current source. The inductors L3 and an L4 may be further arranged in series at the two ends of AC, which can also serve the function of suppressing resonance. In this step, in an early stage when the Q2 and Q3 are turned on, an inductive current flowing through the first inductor and the second inductor gradually increases, and Q3 is turned off after the inductive current flowing through the first inductor and the second inductor reaches a peak in the continuous first time period, where the second time period may be preset according to an output requirement, and the peak of the inductive current is related to the length of the first time period.

Step 106: Turn on Q4. At this time, after Q3 is turned off in step 105, as the inductors L2 and L1 serve the function of free-wheeling, after Q1 is turned off, D4 is turned to be in on-state, and is in on-state. After turn-on, a voltage over two ends of D4 and Q4 is very low and close to zero. At this time, zero-voltage turn-on of the Q4 can be implemented by turning on the Q4. In this process, the inductive current flowing through the L1 and L2 gradually decreases to zero.

Step 107: C is charged in both step 105 and step 106, and after the inductive current flowing through L1 and L2 gradually decreases to zero, the first capacitor also discharges to generate a reverse inductive current flowing through L1 and L2. In this process, detection may be performed on the inductive current and the reverse inductive current flowing through L1 and L2, and when it is detected that the current flowing through L1 and L2 is smaller than the first threshold, Q4 is turned off, to implement zero-current turn-off of Q4.

Step 108: Turn on Q3. After Q4 is turned off, a discharge current of the first capacitor C flows through D3. At this time, D3 is in on-state, and two ends of D3 and Q3 is close to zero. At this time, zero-voltage turn-on of Q3 can be implemented by turning on Q3. The procedure is returned to the stage when Q3 and Q2 are turned on at the same time in step 105.

In the second half output cycle of the inverter circuit, steps 105 to 108 are executed repeatedly. The peak of the inductive current flowing through L1 and L2 may be controlled by controlling time from turning on to turn-off of Q3. In the third 1/4 cycle, the time from turning on to turn-off of Q3 may be gradually increased, and in the fourth 1/4 cycle, the time from turning on to turn-off of Q3 may be gradually reduced. Specifically, the inductive current flowing through L1 and L2 is shown in FIG. 6B.

In the foregoing process, the unipolar output of the inverter circuit is implemented by solely controlling turning on or turning off of one switch tube each time. In addition, bipolar modulation output may be implemented by synchronously controlling turning on or turning off of two switch tubes, and at the same time, the effect of the soft switch can also be achieved. Specifically, a first switch tube and a fourth switch tube are turned on first, and a second switch tube and a third switch tube are turned off, so that an inductive current flowing through a first inductor and a second inductor gradually increases, where the inductive current is divided into a current flowing through a first alternating current source or a first alternating current load, and a current for charging a first capacitor.

The first switch tube and the fourth switch tube are turned off after the inductive current flowing through the first inductor and the second inductor reaches a peak in a continuous set first time period.

A second diode unit and a third diode unit are in on-state, and the second switch tube and the third switch tube are turned on, so as to implement low-voltage turn-on of the second switch tube and the third switch tube.

Further, after the second switch tube and the third switch tube are turned on, the inductive current flowing through the first inductor and the second inductor gradually decreases to zero, the charged first capacitor discharges, and a direct current source supplies power to generate and gradually increase a reverse inductive current flowing through the first inductor and the second inductor. In this process, if it is detected that the inductive current or the reverse inductive current flowing through the first inductor and the second inductor has an absolute value smaller than a first threshold, the second switch tube and the third switch tube are turned off, to implement low-current turn-off of the second switch tube and the third switch tube.

In addition, after the second switch tube and the third switch tube are turned off, a first diode unit and a fourth diode unit are in on-state, a voltage over two ends of the first diode unit and the fourth diode unit is very low. At this time, low-voltage turn-on of the first switch tube and the fourth switch tube can be implemented by turning on the first switch tube and the fourth switch tube.

In the foregoing comparative example, low-voltage turn-on and low-current turn-off of a switch tube are implemented, and the effect of the soft switch can be achieved. In a case that the inverter circuit has more than two inverter bridges, and the first inductor and the second inductor are on different inverter bridges, a time when an inductive current flowing through the first inductor reaches a peak and another time when an inductive current flowing through the second inductor reaches a peak are controlled to be staggered.

Different from the foregoing comparative example where the first switch tube and the fourth switch tube are turned on first, the first switch tube and the third switch tube may be turned on first, and the first switch tube and the fourth switch tube may be turned off, so that the inductive current flowing through the first inductor and the second inductor gradually increases, where the inductive current is divided into the current flowing through the first alternating current source or the first alternating current load, and the current for charging the first capacitor. The second switch tube and the third switch tube are turned off after the inductive current flowing through the first inductor and the second inductor reaches a peak in a continuous set first time period.

The first diode unit and the fourth diode unit are in on-state, and the first switch tube and the fourth switch tube are turned on, so as to implement low-voltage turn-on of the first switch tube and the fourth switch tube.

Further, after the first switch tube and the fourth switch tube are turned on, the inductive current flowing through the first inductor and the second inductor gradually decreases to zero, the charged first capacitor discharges, and the direct current source supplies power to generate and gradually increase a reverse inductive current flowing through the first inductor and the second inductor. In this process, detection is performed on the inductive current and the reverse inductive current flowing through the first inductor and the second inductor, and when it is detected that the inductive current or the reverse inductive current flowing through the first inductor and the second inductor has an absolute value smaller than the first threshold, the first switch tube and the fourth switch tube are turned off, to implement low-current turn-off of the first switch tube and the fourth switch tube.

In addition, after the first switch tube and the fourth switch tube are turned off, the second diode unit and the third diode unit are in on-state, and the second switch tube and the third switch tube are turned on, to implement low-voltage turn-on of the second switch tube and the third switch tube.

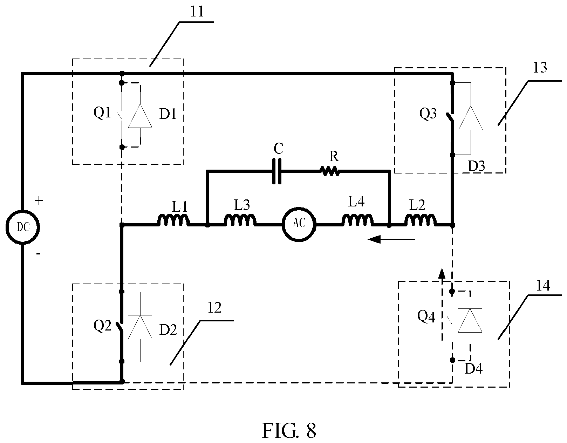

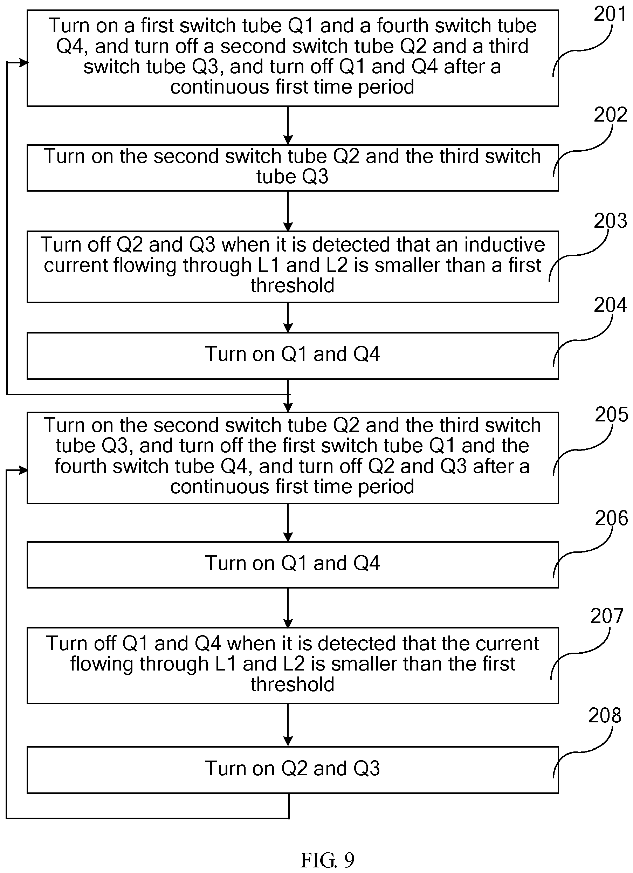

In the foregoing comparative example, the low-voltage turn-on and low-current turn-off of the switch tube are implemented, and the effect of the soft switch can be achieved. In the case that the inverter circuit has more than two inverter bridges, and the first inductor and the second inductor are on different inverter bridges, a time when an inductive current flowing through the first inductor reaches a peak and another time when an inductive current flowing through the second inductor reaches a peak are controlled to be staggered. A difference between this bipolar modulation output manner and the unipolar modulation lies in that, in the bipolar modulation, Q1 and Q4 are synchronously turned on or turned off, and Q3 and Q2 are also synchronously turned on or turned off Specifically referring to FIG. 7 and FIG. 8, reference may be made to FIG. 9 for modulation steps of the bipolar modulation output.

Specifically, as shown in FIG. 9, the bipolar modulation output may include the following steps.

Step 201: Turn on the first switch tube Q1 and the fourth switch tube Q4, and turn off the second switch tube Q2 and the third switch tube Q3. At this time, in one loop, a current is output from the positive pole of the direct current source, and flows through Q1, L1, C, R, L2, and Q4, and back to the negative pole of the direct current source. The current of the loop charges the first capacitor C, and an arranged resistor R can serve a function of suppressing resonance. In addition, another loop is included, that is, a current is output from the positive pole of the direct current source, and flows through Q1, L1, L3, AC, L4, L2, and Q4, and back to the negative pole of the direct current source, where a third inductor L3 and a fourth inductor L4 can also serve the function of suppressing resonance. In this step, in an early stage when Q1 and Q4 are turned on, an inductive current flowing through L1 and L2 gradually increases, and Q1 and Q4 are turned off after the current flowing through L1 and L2 reaches a peak in a continuous first time period, where the first time period may be preset according to an output requirement, and the peak of the inductive current is related to the length of the first time period.

Step 202: Turn on the second switch tube Q2 and the third switch tube Q3. At this time, the inductors L1 and L2 serve a function of free-wheeling. After Q1 is turned off, D2 and D3 are turned to be in on-state, and are in on-state. After turn-on, a voltage over two ends of D2 and Q2 and a voltage over two ends of D3 and Q3 are very low and close to zero. At this time, low-voltage turn-on of Q2 and Q3 can be implemented by turning on Q2 and Q3. In this process, the inductors freewheel, and the inductive current flowing through L1 and L2 gradually decreases to zero.

Step 203: C is charged in both step 201 and step 202, and after the current flowing through L1 and L2 gradually decreases to zero, both the first capacitor discharges and the direct current source DC supplies power to generate a reverse inductive current flowing through L1 and L2. In this process, the inductive current flowing through L1 and L2 may be controlled to be low, and the inductive current flowing through the L1 and L2 may be measured. When it is detected that the current flowing through L1 and L2 is smaller than the first threshold, Q2 and Q3 are turned off, to implement low-current turn-off of Q2 and Q3.

Step 204: Turn on the Q1 and Q4. After the Q2 and Q3 are turned off, a discharge current of the first capacitor C flows through D1 and D4. At this time, D1 and D4 are turned to be in on-state, and two ends of Q1 and Q4 are close to zero, so low-voltage turn-on of Q1 and Q4 can be implemented. The procedure is returned to the stage that both Q1 and Q4 are turned to be in on-state in step 201 to continue execution.

In the first half output cycle of the alternating current, steps 201 to 204 are executed repeatedly. The peak of the inductive current flowing through L1 and L2 may be controlled by controlling time from turning on to turning off of Q1 and Q4, that is, the first time period. In the first 1/4 cycle, the first time period may be gradually increased, that is, the time from turning on to turning off of Q1 and Q4 is increased, and in the second 1/4 cycle, the first time period may be gradually reduced, that is, the time from turning on to turning off of Q1 and Q4 is reduced.

In the second half cycle, the following steps may be executed repeatedly.

Step 205: Turn on the second switch tube Q2 and the third switch tube Q3, and turn off the first switch tube Q1 and the fourth switch tube Q4. At this time, in one loop, a current is output from the positive pole of the direct current source, and flows through Q3, L2, R, C, L1, and Q2, and back to the negative pole of the direct current source. The current of the loop charges the first capacitor C, and the arranged resistor R can serve the function of suppressing resonance. In addition, another loop is included, that is, a current is output from the positive pole of the direct current source, and flows through Q3, L2, L4, AC, L3, L1, and Q2, and back to the negative pole of the direct current source, where the third inductor L3 and the fourth inductor L4 can also serve the function of suppressing resonance. In this step, an inductive current flowing through the inductors L1 and L2 gradually increases, and Q2 and Q3 are turned off after the continuous first time period, where the first time period may be preset according to an actual requirement, and the peak of the inductive current is related to the length of the first time period.

Step 206: Turn on Q1 and Q4. At this time, after Q2 and Q3 are turned off in step 205, as the inductors L2 and L1 serve the function of free-wheeling, and D1 and D4 are turned to be in on-state, after turn-on, a voltage over two ends of D1 and D4 and a voltage over two ends of Q1 and Q4 are very low and close to zero. At this time, low-voltage turn-on of Q1 and Q4 can be implemented by turning on Q1 and Q4. In this process, the inductors freewheel, and the current flowing through L2 and L1 gradually decreases to zero.

Step 207: C is charged in both step 205 and step 206, and after the current flowing through L2 and L1 gradually decreases to zero, the capacitor discharges, and the direct current source DC supplies power, so that an inductive current flowing through the inductors L2 and L1 is generated. In this process, the inductive current flowing through L1 and L2 may be controlled to be low, so the inductive current flowing through L1 and L2 may be measured, and when it is detected that the inductive current flowing through L1 and L2 is smaller than the first threshold, Q1 and Q4 are turned off, to implement low-current turn-off of Q1 and Q4.

Step 208: Turn on Q2 and Q3. After Q1 and Q4 are turned off, a discharge current of the C flows through D2 and D3, and D2 and D3 are turned to be in on-state. At this time, two ends of the Q2 and Q3 are close to zero. At this time, low-voltage turn-on of Q2 and Q3 can be implemented by turning on Q2 and Q3. The process is returned to the stage that both Q2 and Q3 are turned to be in on-state in step 201 to continue execution.

Steps 205 to 208 are executed repeatedly. The peak of the inductive current flowing through L1 and L2 may be controlled by controlling the first time period, that is, time from turning on to turning off of Q2 and Q3. In the first 1/4 cycle, the time from turning on to turning off of Q2 and Q3 may be gradually increased, and in the second 1/4 cycle, the time from turning on to turning off of Q2 and Q3 may be gradually reduced.

It can be known from the foregoing analysis, in the first 1/2 cycle and the second 1/2 cycle, directions of currents flowing through L1 and L2 are different, and the bipolar output can be implemented. Meanwhile, in the foregoing technical solution, the zero-current turning off and zero-voltage turn-on of the switch tubes are also implemented, thereby achieving the effect of the soft switch.

In the inverter circuit provided in the foregoing comparative example, the effect of the soft switch can be implemented by the direct current source supplying power. In addition, in a case that the alternating current circuit includes an alternating current source, the effect of the soft switch can be implemented by controlling any inverter bridge in a case that the alternating current source supplies power.

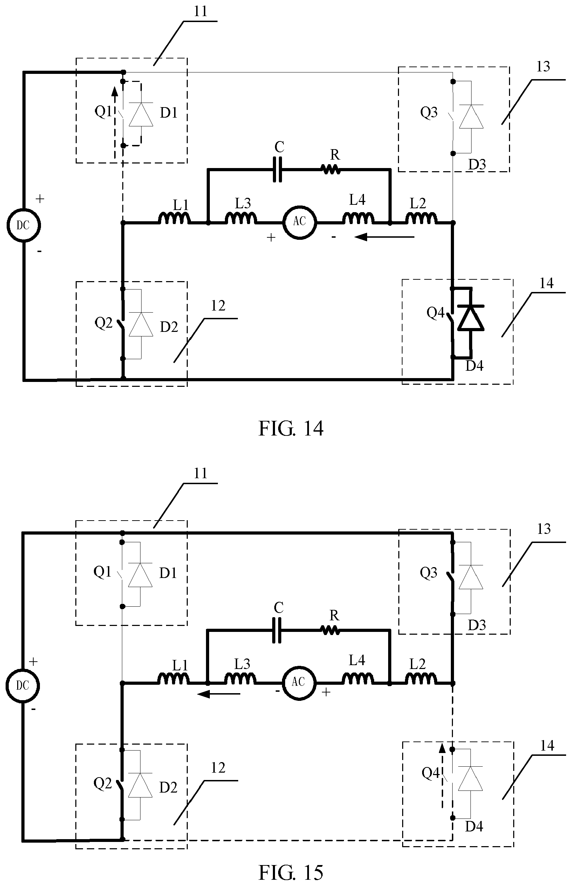

Specifically, referring to FIG. 14, a second switch tube Q2 and a fourth switch tube Q4 are turned on first, a first switch tube Q1 and a third switch tube Q3 are turned off, and a first alternating current source AC supplies power, so that an inductive current flowing through a first inductor L1 and a second inductor L2 gradually increases. The second switch tube Q2 is turned off after the inductive current flowing through the first inductor L1 and the second inductor L2 reaches a peak in a continuous set first time period, where the peak of the inductive current flowing through the first inductor L1 and the second inductor L2 is related to the length of the set first time period.

After the second switch tube Q2 is turned on, a first diode unit D1 is in on-state, and a voltage over two ends of the first diode unit is very low. At this time, low-voltage turn-on of the first switch tube Q1 can be implemented by turning on the first switch tube Q1.

Further, after the first switch tube Q1 is turned on, in a process that the inductive current flowing through the first inductor L1 and the second inductor L2 gradually decreases to zero, and a direct current source DC supplies power to generate and gradually increase a reverse inductive current flowing through the first inductor L1 and the second inductor L2, if it is detected that the inductive current or the reverse inductive current flowing through the first inductor L1 and the second inductor L2 has an absolute value smaller than a first threshold, the first switch tube Q1 is turned off, to implement low-current turn-off of the first switch tube Q1.

In addition, after the first switch tube Q1 is turned off, the second diode unit D1 is in on-state, and a voltage over two ends is very low. At this time, low-voltage turn-on of the second switch tube Q2 can be implemented by turning on the second switch tube Q2.

In the process of performing the foregoing steps, soft switch performance of a switch tube can be achieved, and the steps can be executed repeatedly in the first half output cycle of the inverter circuit. In one 1/4 cycle, the length of the first time period is increased gradually and in the second 1/4 cycle, the length of the first time period is reduced in turn, so that the peak of the current flowing through L1 and L2 first increases and then decreases. In addition, in the case that the inverter circuit has more than two inverter bridges, and the first inductor and the second inductor are on different inverter bridges, a time when an inductive current flowing through the first inductor reaches a peak and another time when an inductive current flowing through the second inductor reaches a peak are reaches a peak is controlled to be staggered.

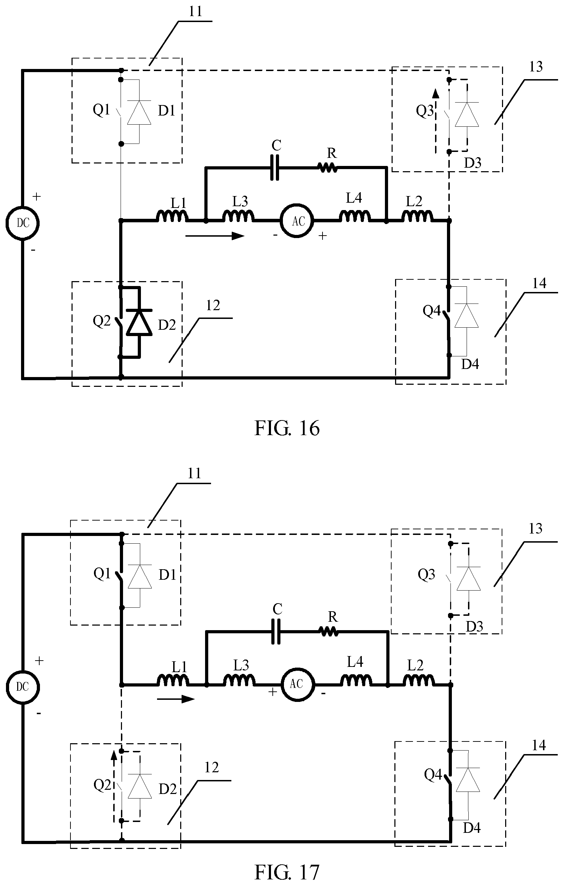

In addition, the second half output cycle of the inverter circuit may be controlled according to the following method. Referring to FIG. 16, the second switch tube Q2 and the fourth switch tube Q4 are turned on first, the first switch tube Q1 and the third switch tube Q3 are turned off, and the first alternating current source AC supplies power. The inductive current flowing through the first inductor L1 and the second inductor L2 gradually increases. The fourth switch tube Q4 is turned off after the inductive current flowing through the first inductor L1 and the second inductor L2 reaches a peak in the continuous set first time period.

After the fourth switch tube Q4 is turned on, the third diode unit D3 is in on-state. At this time, the third switch tube Q3 is turned on, to implement low-voltage turn-on of the third switch tube Q3.

Further, in the foregoing comparative example, after the third switch tube Q3 is turned on, in a process that the inductive current flowing through the first inductor L1 and the second inductor L2 gradually decreases to zero, and the direct current source supplies power to generate and gradually increase a reverse inductive current flowing through the first inductor L1 and the second inductor L2, detection may be performed on the inductive current and the reverse inductive current flowing through the first inductor L1 and the second inductor L2, and when it is detected that the inductive current or the reverse inductive current flowing through the first inductor L1 and the second inductor L2 has an absolute value smaller than the first threshold, the third switch tube Q3 is turned off, so as to implement low-current turn-off of the third switch tube Q3.

In addition, after the third switch tube Q3 is turned off, the fourth diode unit D4 is in on-state, and a voltage over two ends is very low. At this time, low-voltage turn-on of the fourth switch tube Q4 can be implemented by turning on the fourth switch tube Q4.

The foregoing steps are executed repeatedly in the first half output cycle of the inverter circuit, the soft switch performance of the switch tube can be achieved. Further, in the first 1/4 cycle, the length of the first time period may be increased in turn, and in the second 1/4 cycle, the length of the first time period may be reduced in turn, so that the peak of the current flowing through L1 and L2 first increases and then decreases. In addition, in a case that the inverter circuit has more than two inverter bridges, and the first inductor and the second inductor are on different inverter bridges, a time when an inductive current flowing through the first inductor reaches a peak and another time when an inductive current flowing through the second inductor reaches a peak are controlled to be staggered.

In the foregoing comparative example, a case of one inverter bridge is taken as an example to describe how to implement the soft switch. In addition, an inverter circuit may include more than two inverter bridges. As shown in FIG. 9, a schematic structural diagram of a circuit where an inverter circuit includes two inverter bridges is shown.

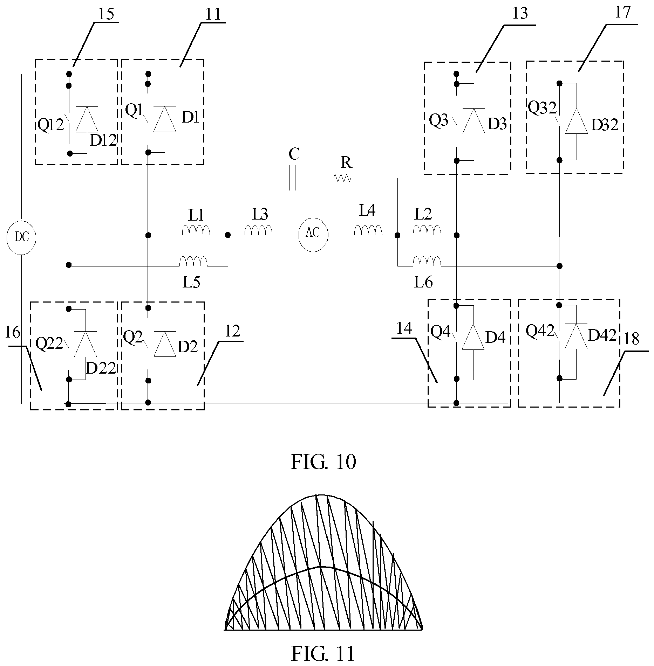

Specifically, as shown in FIG. 10, the inverter circuit further includes another inverter bridge based on the first inverter bridge, that is, a third bridge arm and a fourth bridge arm. The third bridge arm is connected to the positive pole and the negative pole of the direct current source, and the third bridge arm and the first bridge are arranged in parallel. The fourth bridge arm is connected to the positive pole and the negative pole of the direct current source, and the fourth bridge arm and the second bridge are arranged in parallel.

The third bridge arm includes a fifth switch component set 15 and a sixth switch component set 16 that are in series, where the fifth switch component set 15 includes a fifth switch tube Q12 and a fifth diode unit D12 that are in parallel, where the negative pole of the fifth diode unit D12 is connected to the positive pole of the direct current source, and the sixth switch component set 16 includes a sixth switch tube Q22 and a sixth diode unit D22 that are in parallel, where the negative pole of the sixth diode unit D22 is connected to the positive pole of the direct current source.

The fourth bridge arm includes a seventh switch component set 21 and an eighth switch component set 22 that are in series, where the seventh switch component set 17 includes a seventh switch tube Q32 and a seventh diode unit D32 that are in parallel, where the negative pole of the seventh diode unit D32 is connected to the positive pole of the direct current source, and the eighth switch component set 22 includes an eighth switch tube Q42 and an eighth diode unit D42 that are in parallel, where the negative pole of the eighth diode unit D42 is connected to the positive pole of the direct current source.

One end of the alternating current circuit is connected between the fifth switch component set 15 and the fifth switch component set 16 through an inductor L5, and the other end of the alternating current circuit is connected between the seventh switch component set 17 and the eighth switch component set 22 through an inductor L6. An effect and a connection relationship of the inductors L5 and L6 are the same as those of the first inductor L1 and the second inductor L2 in the first inverter circuit.

The inverter bridges of the inverter circuit shown in FIG. 10 are controlled by using the control method in the foregoing embodiment, and the first inductor and the second inductor are on different inverter bridges, a time when an inductive current flowing through the first inductor reaches a peak and another time when an inductive current flowing through the second inductor reaches a peak are controlled to be staggered, that is, in the technical solution of the two inverter bridges in FIG. 10, the time when a current flowing through L1 and L2 reaches a peak is staggered with time when a current flowing through L5 and L6 reaches a peak. As shown in FIG. 11, the upper half part may be considered as the current flowing through L1 and L2, the lower half part may be considered as the current flowing through L5 and L6, the two currents are superposed, and times when peaks are reached are staggered.

In addition, in each of the foregoing embodiments of the present invention, a switch tube and a diode unit of each switch component set may be independently arranged electronic components, that is, the first switch tube Q1 and the first diode unit D1 that are in parallel may be independently arranged electronic components, the second switch tube Q2 and the second diode unit D2 may be independently arranged electronic components, the third switch tube Q3 and the third diode unit D3 may be independently arranged electronic components, and the fourth switch tube Q4 and the fourth diode unit D4 may be independently arranged electronic components.

Moreover, in specific embodiments of the present invention, the first diode unit D1, the second diode unit D2, the third diode unit D3, or the fourth diode unit D4 may be formed in any one of the following manners: an independently arranged diode or a diode set formed by more than two diodes in series. The first switch tube Q1, the second switch tube Q2, the third switch tube Q3, and the fourth switch tube Q4 may be any one of the following switch tubes: a MOSFET tube, a triode, an IGBT tube, or a silicon controlled rectifier.

In addition, as an MOSFET tube has one parasitic diode, the MOSFET tube itself has functions of the switch tube and the diode. Therefore, the parasitic diode can be used as a diode unit, and in this case, MOSFET tubes can be directly used as the first switch component set, the second switch component set, the third switch component set, and the fourth switch component set. The first switch tube Q1 and the first diode unit D1, the second switch tube Q2 and the second diode unit D2, the third switch tube Q3 and the third diode unit D3, and the fourth first switch tube Q4 and the fourth diode unit D4 are components in corresponding MOSFET tubes.

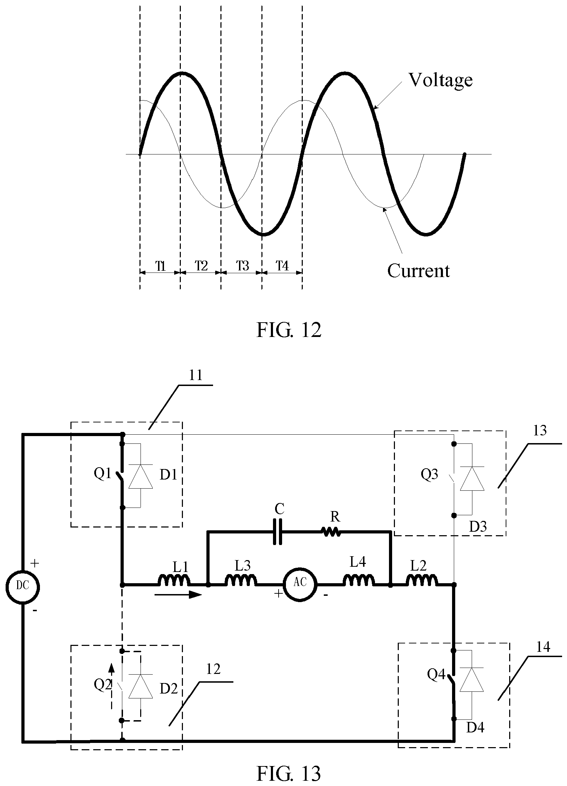

In the technical solutions provided in the foregoing embodiments of the present invention, a reactive power compensation function may also be implemented. Specific reactive power compensation is shown in FIG. 12. In time periods T1 and T3, an output voltage of a voltage source AC is in the same phase with a current of the voltage source AC. Work of the reactive power compensation is the same as that of normal pure active power output, only the setting of the current is a little different, and the reactive power compensation can be implemented by controlling turn-on time. In time periods T2 and T3, the reactive power compensation can be implemented by controlling the output voltage of the voltage source AC to be in a reverse phase of the current of the voltage source AC.

Specifically, for the unipolar modulation output manners described above, circuits are shown in FIG. 13, FIG. 14, FIG. 15, and FIG. 16, corresponding to time periods T1, T2, T3, and T4. Working principles of the circuits are described in the following.
(a) Corresponding to the time period T1 in FIG. 12, and as shown in FIG. 13, a direction of a current may be controlled from L1 to the first voltage source AC and then to L2, the positive pole of the first voltage source AC is controlled to be on an L1 side, the negative pole of the first voltage source is controlled to be on an L2 side, in this working cycle, Q4 is maintained in on-state all the time, Q3 is turned off all the time, Q1 is used as a main control switch tube, Q1 and Q2 alternately work at a high frequency, the output voltage of the first voltage source is in the same phase with the direction of the current of the first voltage source in the time period T1, and the normal pure active power output can be implemented.
(b) Corresponding to the time period T2 in FIG. 11, and as shown in FIG. 14, the positive pole of the first voltage source AC is on the L1 side, the negative pole of the first voltage source AC is on the L2 side, the first voltage source AC supplies power, and the current flows from L2 to the voltage source AC and then to L1. Q2 and Q4 may be turned on first, one current loop is formed by L3, L1, Q2, Q4 (D4), L2, L4, and the alternating current source, and another current loop is formed by C, L1, Q2, Q4 (D4), R, and C. When Q2 is turned off, the current in L1 and L2 flows through D1 (Q1), the first current source DC, and Q4 (D4) to form a loop. Different output currents may be obtained by adjusting the turn-on time of the Q2. When the voltage is close to zero, to maintain the current, turn-on time of Q2 and Q4 may be increased. In the time period T2, the output voltage of the first current source AC is in a reverse phase of the current of the first current source AC, and injection of reactive power from the grid to the inverter circuit can be implemented. In the time period T2, Q4 is in on-state all the time, Q1 and Q2 alternately work at a high frequency, and Q2 is used as a main control switch tube.
(c) Corresponding to the time period T3 in FIG. 11, and as shown in FIG. 15, the direction of the current may be controlled from L2 to the voltage source AC and then to L1, the positive pole of the voltage source AC is controlled to be on the L2 side, and the negative pole of the voltage source is controlled to be on the L1 side, so that the output voltage of the first voltage source is in the same phase with the current of the first voltage source, and the normal pure active power output can be implemented. In the time period T3, Q2 is in on-state all the time, Q3 and Q4 alternately work at a high frequency, and Q3 is used as a main control switch tube.
(d) Corresponding to the time period T4 in FIG. 11, and as shown in FIG. 16, the positive pole of the voltage source is at the L2 side, the negative pole of the voltage source is at the L1 side, the current flows from L1 to the voltage source and then to L2. Q2 and Q4 may be turned on first. One current loop is formed by L4, L2, Q4, Q2 (D2), L2, L3, and the alternating current source, and another loop is formed by C, R, L2, Q4 (D4), L1, and C. In the time period T4, the output voltage of the current source is in a reverse phase of the current of the current source, and injection of reactive power from the electric supply to the inverter circuit can be implemented. In the period, Q2 is in on-state all the time, Q3 and Q4 alternately work at a high frequency, and Q4 is used as a main control tube.

In addition, for the bipolar modulation solution, the reactive power compensation may also be implemented, which may specifically be shown in FIG. 17, FIG. 18, FIG. 19, and FIG. 20.

As shown in FIG. 17, in the time period T1, Q1 and Q4 are turned on first, Q3 and Q2 are turned off, the current flows from the L1 to the first voltage source AC and then to the L2, the positive pole of the first voltage source is on the L1 side, and the negative pole of the first voltage source is on the L2 side. In a subsequent control process, synchronous turn-off of the Q1 and Q4 and synchronous turn-on of Q3 and Q3 are repeated, so that in the time period T1, the output voltage is in the same phase with the current, and the pure active power output can be implemented.

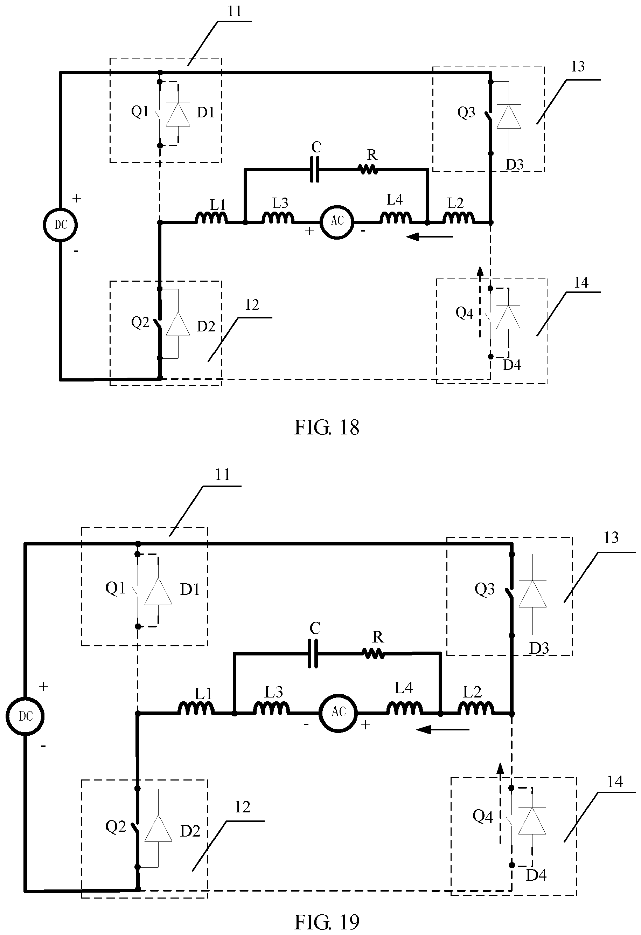

As shown in FIG. 18, in the time period T2, Q2 and Q3 are turned on first, Q1 and Q4 are turned off, the current flows from L2 to the first voltage source AC and then to L1, the positive pole of the first voltage source is on the L1 side, and the negative pole of the first voltage source is on the L2 side. In a subsequent control process, synchronous turn-off of Q2 and Q3 and synchronous turn-on of Q1 and Q4 are repeated, so that in the time period T2, the output voltage is in a reverse phase of the current, and injection of reactive power from the electric supply to the inverter circuit can be implemented.

As shown in FIG. 19, in the time period T3, Q1 and Q4 are turned on first, Q3 and Q2 are turned off, the current flows from L1 to the first voltage source AC and then to L2, the positive pole of the first voltage source is on the L1 side, and the negative pole of the first voltage source is on the L2 side. In a subsequent control process, synchronous turn-off of Q1 and Q4 and synchronous turn-on of Q3 and Q3 are repeated, so that in the time period T3, the output voltage is in the same phase with the current, and the pure active power output can be implemented.

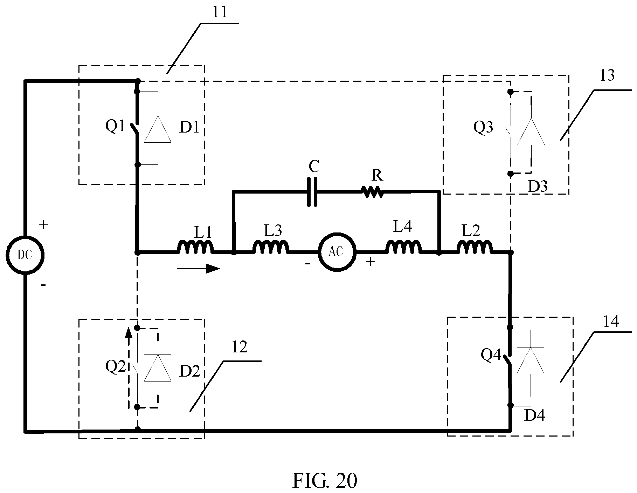

As shown in FIG. 20, in the time period T4, Q2 and Q3 are turned on first, Q1 and Q4 are turned off, the current flows from L2 to the first voltage source AC and then to L1, the positive pole of the first voltage source is on the L1 side, and the negative pole of the first voltage source is on the L2 side. In a subsequent control process, synchronous turn-off of Q2 and Q3 and synchronous turn-on of Q1 and Q4 are repeated, so that in the time period T4, the output voltage is in a reverse phase of the current, and injection of reactive power from the electric supply to the inverter circuit can be implemented.

Persons of ordinary skill in the art may understand that all or part of the steps of the foregoing method embodiment may be implemented by a program instructing relevant hardware. The program may be stored in a computer readable storage medium. When the program is run, the foregoing steps of the foregoing method embodiment are performed. The storage medium may be any medium capable of storing program codes, such as a ROM, a RAM, a magnetic disk, or an optical disk.

Finally, it should be noted that the foregoing embodiment is merely intended for describing the technical solutions of the present invention other than limiting the present invention. Although the present invention is described in detail with reference to the foregoing embodiment, persons of ordinary skill in the art should understand that they may still make modifications to the technical solutions described in the foregoing embodiment, or make equivalent replacements to some technical features thereof; and such modifications or replacements do not make essence of corresponding technical solutions departing from the scope of the technical solutions of the embodiment of the present invention.

## Claims

1. An inverter circuit, comprising a direct current source, an alternating current circuit and more than one inverter bridge, wherein each inverter bridge comprises a first bridge and a second bridge, the first bridge being connected to the positive pole and the negative pole of the direct current source, the second bridge being connected to the positive pole and the negative pole of the direct current source, and the first bridge and the second bridge being arranged in parallel;
wherein the first bridge comprises a first switch component set (11) and a second switch component set (12) that are in series, wherein the first switch component set comprises a first switch tube (Q1) and a first diode unit (D1) that are in parallel, wherein the negative pole of the first diode unit is connected to the positive pole of the direct current source, and the second switch component set comprises a second switch tube (Q2) and a second diode unit (D2) that are in parallel, wherein the negative pole of the second diode unit is connected to the positive pole of the direct current source, and wherein the first bridge comprises a first inductor (L2);
wherein the second bridge comprises a third switch component set (13) and a fourth switch component set (14) that are in series, wherein the third switch component set comprises a third switch tube (Q3) and a third diode unit (D3) that are in parallel, wherein the negative pole of the third diode unit is connected to the positive pole of the direct current source, and the fourth switch component set comprises a fourth switch tube (Q4) and a fourth diode unit (D4) that are in parallel, wherein the negative pole of the fourth diode unit is connected to the positive pole of the direct current source, and wherein the second bridge comprises a second inductor (L2);
wherein the alternating current circuit comprises a first alternating current source and a first capacitor (C) that are in parallel, or comprises a first alternating current load and a first capacitor that are in parallel, wherein one end of the alternating current circuit is connected between the first switch component set and the second switch component set of the first bridge through the first inductor (L1), and the other end of the alternating current circuit is connected between the third switch component set and the fourth switch component set of the second bridge through the second inductor (L2) wherein the inverter circuit is arranged such that low-current turn-off of the second switch tube is implemented by, in a process that the inductive current flowing through the first inductor and the second inductor gradually decreases to zero, and the charged first capacitor discharges to generate and gradually increase a reverse inductive current flowing through the first inductor and the second inductor, if it is detected that the inductive current or the reverse inductive current flowing through the first inductor and the second inductor has an absolute value smaller than a first threshold, then the second switch tube is turned off, and, **characterised in that** when the inverter circuit has more than two inverter bridges, and the first inductor (L1) and the second inductor (L2) are part of different inverter bridges, a time when an inductive current flowing through the first inductor reaches a peak and another time when an inductive current flowing through the second inductor reaches a peak are controlled to be staggered, and the circuit further comprises a third inductor (L3) and a fourth inductor (L4), wherein when the alternating current circuit comprises the first alternating current source, the first capacitor is in parallel with a circuit which is formed by the third inductor, the first alternating current source and the fourth inductor; and when the alternating current circuit comprises the first alternating current load, the first capacitor is in parallel with a circuit which is formed by the third inductor, the first alternating current load and the fourth inductor.

2. The inverter circuit according to claim 1, wherein the circuit further comprises a resistor (R), and the resistor is in series with the first capacitor (C).

3. The inverter circuit according to claim 1 or 2, wherein the first switch tube (Q1) and the first diode unit (D1) are independently arranged electronic components, the second switch tube (Q2) and the second diode unit (D2) are independently arranged electronic components, the third switch tube (Q3) and the third diode unit (D3) are independently arranged electronic components, and the fourth switch tube (Q4) and the fourth diode unit (D4) are independently arranged electronic components.

4. The inverter circuit according to claim 3, wherein the first diode unit (D1), the second diode unit (D2), the third diode unit (D3), or the fourth diode unit (D4) are formed in any one of the following manners: an independently arranged diode or a diode set formed by more than two diodes in series; and
the first switch tube (Q1), the second switch tube (Q2), the third switch tube (Q3), and the fourth switch tube (Q4) are any one of the following switch tubes: a MOSFET tube, a triode, an IGBT tube, or a silicon controlled rectifier.

5. The inverter circuit according to any one of claims 1 to 4, wherein the first switch component set (11), the second switch component set (12), the third switch component set (13), and the fourth switch component set (14) are MOSFET tubes, and the first switch tube (Q1) and the first diode unit (D1), the second switch tube (Q2) and the second diode unit (D2), the third switch tube (Q3) and the third diode unit (D3), and the fourth first switch tube (Q4) and the fourth diode unit (D4) are components in corresponding MOSFET tubes.

6. A control method for the inverter circuit according to any one of claims 1 to 5, wherein any inverter bridge in the inverter circuit is controlled according to the following method:
turning on the first switch tube (Q1) and the fourth switch tube (Q4), and turning off the second switch tube (Q2) and the third switch tube (Q3), so that an inductive current flowing through the first inductor (L1) and the second inductor (L2) gradually increases, wherein the inductive current is divided into a current flowing through the first alternating current source or the first alternating current load, and a current for charging the first capacitor (C);
turning off the first switch tube after the inductive current flowing through the first inductor and the second inductor reaches a peak in a continuous set first time period;
enabling the second diode unit to be in on-state, and turning on the second switch tube, to implement low-voltage turn-on of the second switch tube;
in a process that the inductive current flowing through the first inductor and the second inductor gradually decreases to zero, and the charged first capacitor discharges to generate and gradually increase a reverse inductive current flowing through the first inductor and the second inductor, if it is detected that the inductive current or the reverse inductive current flowing through the first inductor and the second inductor has an absolute value smaller than a first threshold, turning off the second switch tube, to implement low-current turn-off of the second switch tube, and **characterised in that** when the inverter circuit has more than two inverter bridges, and the first inductor (L1) and the second inductor (L2) are part of different inverter bridges, a time when an inductive current flowing through the first inductor reaches a peak and another time when an inductive current flowing through the second inductor reaches a peak are controlled to be staggered, and the circuit further comprises a third inductor (L3) and a fourth inductor (L4), wherein when the alternating current circuit comprises the first alternating current source, the first capacitor is in parallel with a circuit which is formed by the third inductor, the first alternating current source and the fourth inductor; and when the alternating current circuit comprises the first alternating current load, the first capacitor is in parallel with a circuit which is formed by the third inductor, the first alternating current load and the fourth inductor.

7. The control method for the inverter circuit according to claim 6, wherein after the turning off the second switch tube, the method further comprises:
enabling the first diode unit (D1) to be in on-state, and turning on the first switch tube (Q1), to implement low-voltage turn-on of the first switch tube.

## Patentansprüche

1. Wechselrichterschaltung, die eine Gleichstromquelle, eine Wechselstromquelle und mehr als eine Wechselrichterbrücke umfasst, wobei jede Wechselrichterbrücke eine erste Brücke und eine zweite Brücke umfasst, wobei die erste Brücke mit dem positiven Pol und dem negativen Pol der Gleichstromquelle verbunden ist, wobei die zweite Brücke mit dem positiven Pol und dem negativen Pol der Gleichstromquelle verbunden ist und die erste Brücke und die zweite Brücke parallel geschaltet sind;
wobei die erste Brücke eine erste Schalterkomponentenmenge (11) und eine zweite Schalterkomponentenmenge (12) umfasst, die in Reihe geschaltet sind, wobei die erste Schalterkomponentenmenge eine erste Schalterröhre (Q1) und eine erste Diodeneinheit (D1) umfasst, die parallel geschaltet sind, wobei der negative Pol der ersten Diodeneinheit mit dem positiven Pol der Gleichstromquelle verbunden ist, und
wobei die zweite Schalterkomponentenmenge eine zweite Schalterröhre (Q2) und eine zweite Diodeneinheit (D2), die parallel geschaltet sind, umfasst, wobei der negative Pol der zweiten Diodeneinheit mit dem positiven Pol der Gleichstromquelle verbunden ist und wobei die erste Brücke eine erste Induktivität (L1) enthält;
wobei die zweite Brücke eine dritte Schalterkomponentenmenge (13) und eine vierte Schalterkomponentenmenge (14), die in Reihe geschaltet sind, umfasst, wobei die dritte Schalterkomponentenmenge eine dritte Schalterröhre (Q3) und eine dritte Diodeneinheit (D3), die parallel geschaltet sind, umfasst, wobei der negative Pol der dritten Diodeneinheit mit dem positiven Pol der Gleichstromquelle verbunden ist, und wobei die vierte Schalterkomponentenmenge eine vierte Schalterröhre (Q4) und eine vierte Diodeneinheit (D4), die parallel geschaltet sind, umfasst, wobei der negative Pol der vierten Diodeneinheit mit dem positiven Pol der Gleichstromquelle verbunden ist und wobei die zweite Brücke eine zweite Induktivität (L2) umfasst;
wobei die Wechselstromschaltung eine erste Wechselstromquelle und einen ersten Kondensator (C), die parallel geschaltet sind, umfasst oder eine erste Wechselstromlast und einen ersten Kondensator, die parallel geschaltet sind, umfasst,
wobei ein Ende der Wechselstromschaltung zwischen die erste Schalterkomponentenmenge und die zweite Schalterkomponentenmenge der ersten Brücke über die erste Induktivität (L1) geschaltet ist und wobei das andere Ende der Wechselstromquelle zwischen die dritte Schalterkomponentenmenge und die vierte Schalterkomponentenmenge der zweiten Brücke über die zweite Induktivität (L2) geschaltet ist, wobei die Wechselrichterschaltung so beschaffen ist, dass ein Niederstrom-Ausschalten der zweiten Schalterröhre in einem Prozess, in dem der induktive Strom, der durch die erste Induktivität und die zweite Induktivität fließt, allmählich auf null abnimmt und der geladene erste Kondensator sich entlädt, um einen induktiven Rückwärtsstrom, der durch die erste Induktivität und die zweite Induktivität fließt, zu erzeugen und allmählich zu erhöhen, implementiert wird durch: falls detektiert wird, dass der induktive Strom oder der induktive Gegenstrom, der durch die erste Induktivität und die zweite Induktivität fließt, einen Absolutwert besitzt, der kleiner als ein erster Schwellenwert ist, die zweite Schalterröhre ausgeschaltet wird, und **dadurch gekennzeichnet, dass** dann, wenn die Wechselrichterschaltung mehr als zwei Wechselrichterbrücken besitzt und die erste Induktivität (L1) und die zweite Induktivität (L2) Teil verschiedener Wechselrichterbrücken sind, eine Zeit, zu der ein induktiver Strom, der durch die erste Induktivität fließt, eine Spitze erreicht, und eine weitere Zeit, zu der ein induktiver Strom, der durch die zweite Induktivität fließt, eine Spitze erreicht, so gesteuert werden, dass sie gestuft sind, und die Schaltung ferner eine dritte Induktivität (L3) und eine vierte Induktivität (L4) umfasst, wobei dann, wenn die Wechselstromschaltung die erste Wechselstromquelle enthält, der erste Kondensator zu einer Schaltung parallel geschaltet ist, die durch die dritte Induktivität, die erste Wechselstromquelle und die vierte Induktivität gebildet ist; und wobei dann, wenn die Wechselstromschaltung die erste Wechselstromlast enthält, der erste Kondensator zu einer Schaltung parallel geschaltet ist, die durch die dritte Induktivität, die erste Wechselstromlast und die vierte Induktivität gebildet ist.

2. Wechselrichterschaltung nach Anspruch 1, wobei die Schaltung ferner einen Widerstand (R) umfasst, wobei der Widerstand mit dem ersten Kondensator (C) in Reihe geschaltet ist.

3. Wechselrichterschaltung nach Anspruch 1 oder 2, wobei die erste Schalterröhre (Q1) und die erste Diodeneinheit (D1) unabhängig angeordnete elektronische Komponenten sind, die zweite Schalterröhre (Q2) und die zweite Diodeneinheit (D2) unabhängig angeordnete elektronische Komponenten sind, die dritte Schalterröhre (Q3) und die dritte Diodeneinheit (D3) unabhängig angeordnete elektronische Komponenten sind und die vierte Schalterröhre (Q4) und die vierte Diodeneinheit (D4) unabhängig angeordnete elektronische Komponenten sind.

4. Wechselrichterschaltung nach Anspruch 3, wobei die erste Diodeneinheit (D1), die zweite Diodeneinheit (D2), die dritte Diodeneinheit (D3) oder die vierte Diodeneinheit (D4) auf eine der folgenden Weisen gebildet sind: als eine unabhängig angeordnete Diode oder als eine Diodenmenge, die durch mehr als zwei in Reihe geschaltete Dioden gebildet ist; und
die erste Schalterröhre (Q1), die zweite Schalterröhre (Q2), die dritte Schalterröhre (Q3) und die vierte Schalterröhre (Q4) irgendwelche der folgenden Schalterröhren sind: eine MOSFET-Röhre, eine Triode, eine IGBT-Röhre oder ein siliciumgesteuerter Gleichrichter.

5. Wechselrichterschaltung nach einem der Ansprüche 1 bis 4, wobei die erste Schalterkomponentenmenge (11), die zweite Schalterkomponentenmenge (12), die dritte Schalterkomponentenmenge (13) und die vierte Schalterkomponentenmenge (14) MOSFET-Röhren sind und die erste Schalterröhre (Q1) und die erste Diodeneinheit (D1), die zweite Schalterröhre (Q2) und die zweite Diodeneinheit (D2), die dritte Schalterröhre (Q3) und die dritte Diodeneinheit (D3) und die vierte Schalterröhre (Q4) und die vierte Diodeneinheit (D4) Komponenten in entsprechenden MOSFET-Röhren sind.

6. Steuerverfahren für die Wechselrichterschaltung nach einem der Ansprüche 1 bis 5, wobei irgendeine Wechselrichterbrücke in der Wechselrichterschaltung gemäß dem folgenden Verfahren gesteuert wird:
Einschalten der ersten Schalterröhre (Q1) und der vierten Schalterröhre (Q4) und Ausschalten der zweiten Schalterröhre (Q2) und der dritten Schalterröhre (Q3), so dass ein induktiver Strom, der durch die erste Induktivität (L1) und die zweite Induktivität (L2) fließt, allmählich zunimmt, wobei der induktive Strom in einen Strom, der durch die erste Wechselstromquelle oder die erste Wechselstromlast fließt, und einen Strom, um den ersten Kondensator (C) zu laden, unterteilt wird;
Ausschalten der ersten Schalterröhre, nachdem der induktive Strom, der durch die erste Induktivität und die zweite Induktivität fließt, in einer kontinuierlich festgelegten ersten Zeitperiode eine Spitze erreicht;
Freigeben der zweiten Diodeneinheit, damit sie in einem Durchlasszustand ist, und Einschalten des zweiten Schalterröhre, um ein Niederspannungseinschalten der zweiten Schalterröhre zu implementieren;
in einem Prozess, in dem der induktive Strom, der durch die erste Induktivität und die zweite Induktivität fließt, allmählich auf null abnimmt und der geladene erste Kondensator sich entlädt, um einen induktiven Gegenstrom, der durch die erste Induktivität und die zweite Induktivität fließt, zu erzeugen und allmählich zu erhöhen: wenn detektiert wird, dass der induktive Strom oder der induktive Gegenstrom, der durch die erste Induktivität und die zweite Induktivität fließt, einen Absolutwert besitzt, der kleiner als ein erster Schwellenwert ist, Ausschalten der zweiten Schalterröhre, um ein Niederstromausschalten der zweiten Schalterröhre zu implementieren, und **dadurch gekennzeichnet, dass** dann, wenn die Wechselrichterschaltung mehr als zwei Wechselrichterbrücken besitzt und die erste Induktivität (L1) und die zweite Induktivität (L2) Teil verschiedener Wechselrichterbrücken sind, eine Zeit, zu der ein induktiver Strom, der durch die erste Induktivität fließt, eine Spitze erreicht, und eine weitere Zeit, zu der ein induktiver Strom, der durch die zweite Induktivität fließt, eine Spitze erreicht, so gesteuert werden, dass sie gestuft sind, und die Schaltung ferner eine dritte Induktivität (L3) und eine vierte Induktivität (L4) umfasst, wobei dann, wenn die Wechselstromschaltung die erste Wechselstromquelle enthält, der erste Kondensator zu einer Schaltung parallel geschaltet ist, die durch die dritte Induktivität, die erste Wechselstromquelle und die vierte Induktivität gebildet ist; und dann, wenn die Wechselstromschaltung die erste Wechselstromlast enthält, der erste Kondensator zu einer Schaltung parallel geschaltet ist, die durch die dritte Induktivität, die Wechselstromlast und die vierte Induktivität gebildet ist.

7. Steuerverfahren für die Wechselrichterschaltung nach Anspruch 6, wobei dann, wenn die zweite Schalterröhre ausgeschaltet worden ist, das Verfahren ferner Folgendes umfasst:
Freigeben der ersten Diode (D1), damit sie in einem Durchlasszustand ist, und
Einschalten der ersten Schalterröhre (Q1), um ein Niederspannungseinschalten der ersten Schalterröhre zu implementieren.

## Revendications

1. Circuit inverseur, comprenant une source de courant continu, un circuit à courant alternatif et plus d'un pont inverseur, dans lequel chaque pont inverseur comprend un premier pont et un second pont, le premier pont étant connecté au pôle positif et au pôle négatif de la source de courant continu, le second pont étant connecté au pôle positif et au pôle négatif de la source de courant continu, et le premier pont et le second pont étant agencés en parallèle ;
dans lequel le premier pont comprend un premier ensemble de composants de commutation (11) et un deuxième ensemble de composants de commutation (12) qui sont en série, dans lequel le premier ensemble de composants de commutation comprend un premier tube de commutation (Q1) et une première unité de diode (D1) qui sont en parallèle, dans lequel le pôle négatif de la première unité de diode est connecté au pôle positif de la source de courant continu, et le deuxième ensemble de composants de commutation comprend un deuxième tube de commutation (Q2) et une deuxième unité de diode (D2) qui sont en parallèle, dans lequel le pôle négatif de la deuxième unité de diode est connecté au pôle positif de la source de courant continu, et dans lequel le premier pont comprend une première bobine d'induction (L1) ;
dans lequel le second pont comprend un troisième ensemble de composants de commutation (13) et un quatrième ensemble de composants de commutation (14) qui sont en série, dans lequel le troisième ensemble de composants de commutation (13) comprend un troisième tube de commutation (Q3) et une troisième unité de diode (D3) qui sont en parallèle, dans lequel le pôle négatif de la troisième unité de diode est connecté au pôle positif de la source de courant continu, et le quatrième ensemble de composants de commutation comprend un quatrième tube de commutation (Q4) et une quatrième unité de diode (D4) qui sont en parallèle, dans lequel le pôle négatif de la quatrième unité de diode est connecté au pôle positif de la source de courant continu, et dans lequel le second pont comprend une deuxième bobine d'induction (L2) ;
dans lequel le circuit à courant alternatif comprend une première source de courant alternatif et un premier condensateur (C) qui sont en parallèle, ou comprend une première charge de courant alternatif et un premier condensateur qui sont en parallèle, dans lequel une extrémité du circuit à courant alternatif est connectée entre le premier ensemble de composants de commutation et le deuxième ensemble de composants de commutation du premier pont par l'intermédiaire de la première bobine d'induction (L1), et l'autre extrémité du circuit à courant alternatif est connectée entre le troisième ensemble de composants de commutation et le quatrième ensemble de composants de commutation du second pont par l'intermédiaire de la deuxième bobine d'induction (L2), dans lequel le circuit inverseur est agencé de telle sorte qu'une désactivation à faible courant du deuxième tube de commutation soit mise en oeuvre, dans un processus dans lequel le courant inductif s'écoulant à travers la première bobine d'induction et la deuxième bobine d'induction diminue graduellement à zéro, et le premier condensateur chargé se décharge pour générer et graduellement augmenter un courant inductif inverse s'écoulant à travers la première bobine d'induction et la deuxième bobine d'induction, s'il est détecté que le courant inductif ou le courant inductif inverse s'écoulant à travers la première bobine d'induction et la deuxième bobine d'induction a une valeur absolue inférieure à une première limite, le deuxième tube de commutation est alors désactivé, et, **caractérisé en ce que** quand le circuit inverseur a plus de deux inverseurs, et la première bobine d'induction (L1) et la deuxième bobine d'induction (L2) font partie de ponts inverseurs différents, un temps auquel un courant inductif s'écoulant à travers la première bobine d'induction atteint un maximum et un autre temps auquel un courant inductif inverse s'écoulant à travers la deuxième bobine d'induction atteint un maximum sont commandés pour être décalés, et le circuit comprend en outre une troisième bobine d'induction (L3) et une quatrième bobine d'induction (L4), dans lequel quand le circuit à courant alternatif comprend la première source de courant alternatif, le premier condensateur est en parallèle à un circuit qui est formé par la troisième bobine d'induction, la première source de courant alternatif et la quatrième bobine d'induction ; et quand le circuit à courant alternatif comprend la première charge de courant alternatif, le premier condensateur est en parallèle à un circuit qui est formé par la troisième bobine d'induction, la première charge de courant alternatif et la quatrième bobine d'induction.

2. Circuit inverseur selon la revendication 1, dans lequel le circuit comprend en outre une résistance (R) et la résistance est en série avec le premier condensateur (C) .

3. Circuit inverseur selon la revendication 1 ou 2, dans lequel le premier tube de commutation (Q1) et la première unité de diode (D1) sont des composants électroniques agencés indépendamment, le deuxième tube de commutation (Q2) et la deuxième unité de diode (D2) sont des composants électroniques agencés indépendamment, le troisième tube de commutation (Q3) et la troisième unité de diode (D3) sont des composants électroniques agencés indépendamment, et le quatrième tube de commutation (Q4) et la quatrième unité de diode (D4) sont des composants électroniques agencés indépendamment.

4. Circuit inverseur selon la revendication 3, dans lequel la première unité de diode (D1), la deuxième unité de diode (D2) la troisième unité de diode (D3), ou la quatrième unité de diode (D4) sont formées de l'une quelconque des manières suivantes : une diode agencée indépendamment ou un ensemble de diodes formé par plus de deux diodes en série ; et
le premier tube de commutation (Q1) le deuxième tube de commutation (Q2), le troisième tube de commutation (Q3), et le quatrième tube de commutation (Q4) sont l'un quelconque des tubes de commutation suivants : un tube MOSFET, une triode, un tube IGBT, ou un redresseur commandé au silicium.

5. Circuit inverseur selon l'une quelconque des revendications 1 à 4, dans lequel le premier ensemble de composants de commutation (11), le deuxième ensemble de composants de commutation (12), le troisième ensemble de composants de commutation (13), et le quatrième ensemble de composants de commutation (14) sont des tubes MOSFET, et le premier tube de commutation (Q1) et la première unité de diode (D1), le deuxième de commutation (Q2) et la deuxième unité de diode (D2), le troisième tube de commutation (Q3) et la troisième unité de diode (D3), et le quatrième tube de commutation (Q4) et la quatrième unité de diode (D4) sont des composants dans des tubes MOSFET correspondants.

6. Procédé de commande du circuit inverseur selon l'une quelconque des revendications 1 à 5, dans lequel n'importe quel pont inverseur dans le circuit inverseur est commandé conformément au procédé suivant :
en activant le premier tube de commutation (Q1) et le quatrième tube de commutation (Q4) et désactivant le deuxième tube de commutation (Q2) et le troisième tube de commutation (Q3), de telle sorte qu'un courant inductif s'écoulant à travers la première bobine d'induction (L1) et la deuxième bobine d'induction (L2) augmente graduellement, dans lequel le courant inductif est divisé en un courant s'écoulant à travers la première source de courant alternatif ou la première charge de courant alternatif, et un courant pour charger le premier condensateur (C) ;
en désactivant le premier tube de commutation après que le courant inductif s'écoulant à travers la première bobine d'induction et la deuxième bobine d'induction atteint un maximum dans une première période de temps continue définie ; et
en excitant la deuxième unité de diode dans l'état activé, et en activant le deuxième tube de commutation, pour mettre en oeuvre une activation à faible tension du deuxième tube de commutation ;
dans un processus selon lequel le courant inductif s'écoulant à travers la première bobine d'induction et la deuxième bobine d'induction diminue graduellement à zéro, et le premier condensateur chargé se décharge pour générer et graduellement augmenter un courant inductif inverse s'écoulant à travers la première bobine d'induction et la deuxième bobine d'induction, s'il est détecté que le courant inductif ou le courant inductif inverse s'écoulant à travers la première bobine d'induction et la deuxième bobine d'induction a une valeur absolue inférieure à une première limite, en désactivant le deuxième tube de commutation, pour mettre en oeuvre une désactivation à faible courant du deuxième tube de commutation, et **caractérisé en ce que** quand le circuit inverseur a plus de deux inverseurs, et la première bobine d'induction (L1) et la deuxième bobine d'induction (L2) font partie de ponts inverseurs différents, un temps auquel un courant inductif s'écoulant à travers la première bobine d'induction atteint un maximum et un autre temps auquel un courant inductif s'écoulant à travers la deuxième bobine d'induction atteint un maximum sont commandés pour être décalés, et le circuit comprend en outre une troisième bobine d'induction (L3) et une quatrième bobine d'induction (L4), dans lequel quand le circuit à courant alternatif comprend la première source de courant alternatif, le premier condensateur est en parallèle à un circuit qui est formé par la troisième bobine d'induction, la première source de courant alternatif et la quatrième bobine d'induction ; et quand le circuit à courant alternatif comprend la première charge de courant alternatif, le premier condensateur est en parallèle à un circuit qui est formé par la troisième bobine d'induction, la première charge de courant alternatif et la quatrième bobine d'induction.

7. Procédé de commande du circuit inverseur selon la revendication 6, le procédé comprenant en outre, après la désactivation du deuxième tube de commutation :
l'excitation de la première unité de diode (D1) dans l'état activé, et l'activation du premier tube de commutation (Q1) pour mettre en oeuvre une activation à faible tension du premier tube de commutation.
